# EUROPEAN PATENT APPLICATION

(11) **EP 2 615 352 A1**
(43) Date of publication of application: **17.07.2013**
(21) Application number: 12150908.7
(22) Date of filing: 12.01.2012
(51) Int. Cl.: F16M 11/12

(54) **Display supporting device**

(71) Applicant: Flytech Technology Co., Ltd, Taipei City (TW)
(72) Inventor: Lin, Chiung-Chi, Taipei City (TW); Chen, Ya-Qiu, Taipei City (TW)
(74) Representative: Viering, Jentschura & Partner

(57) **Abstract**

A display supporting device(1) comprises a supporting sleeve(10), a pivotable head(20), a first fastener(30), a second fastener(40), and a third fastener(50). The supporting sleeve(10) has a circular hollow cross-section and a penetrating hole(101) on the side wall thereof. The pivotable head(20) has a head portion(201) and a neck portion(202). The neck portion(202) has two stopping sections(2022) and is adapted to rotatably couple the supporting sleeve(10) to enable lateral angle adjustment. The first fastener(30) is arranged in the pivotable head(20) for coupling a display unit. The second fastener(40) has an attaching hole(401) correspondingly aligns the penetrating hole(101), enabling horizontal rotation of the pivotable head(20) about the second fastener(40). The third fastener(50) passes through the penetrating hole(101) of the supporting sleeve(10) and the attaching hole(401) of the second fastener(40). The horizontal rotation of the pivotable head(20) is restricted through the contact between the stopping sections thereof and the third fastener(50).

## Description

### BACKGROUND OF THE INVENTION

### 1. Field of the Invention

The present invention relates to a display supporting device, and more particularly, to a display supporting device having wire concealing capability for providing improved wire management and enhanced aesthetics.

### 2. Description of Related Art

Conventional computer monitor supporting devices only allow pivotable adjustment in the vertical plane, resulting in the restricted lateral angle adjustment.

Though some improved display supporting devices allow pivotable adjustment in multiple directions, the structural design of such supporting devices tends to be too complicated, resulting in complicated assembly process and high production cost.

Furthermore, conventional monitor displays require at least one exposed wire/cable for establishing signal connection with the host machine. It is often difficult to neatly bundle and properly manage the cables to maintain a clean and orderly appearance.

To address the above issues, the inventors strive via industrial experience and academic research to present the instant disclosure, which can effectively improve the limitations described above.

### SUMMARY OF THE INVENTION

The object of the present invention is to provide a display supporting device having both vertical and horizontal angle adjusting mechanisms with wire concealing capability for providing improved wire management and enhanced aesthetics. The display supporting device includes a vertically adjustable pivotable head rotatably coupled to an end of a hollow supporting sleeve to enable horizontal angle adjustment. The exposed wires/ cables of the supported display unit may pass through the hollow supporting sleeve, therefor hidden away from external sight.

In order to achieve the aforementioned objects, according to an embodiment of the present invention, a display supporting device is provided to support a display unit wherein the display unit is connected to a plurality of exposed wires; the supporting device comprises: a supporting sleeve having a circular hollow transverse cross-section and at least one penetrating hole on the side wall thereof; a pivotable head including a head portion and a neck portion connected thereto, wherein the head portion has a through hole arranged proximate the hollow section of the supporting sleeve, the neck portion has a pair of stopping sections defining a mouth that corresponds to the through hole and is adapted to rotatably couple to one end of the supporting sleeve to enable lateral angle adjustment, at least one first fastener is arranged in the pivotable head for coupling the display; a second fastener having at least one attaching hole corresponds to the penetrating hole, wherein the second fastener passes through the through hole of the head portion partially and protrudes toward the supporting sleeve longitudinally, thereby enabling horizontal rotation of the pivotable head about the second fastener; a third fastener aligningly passing through the penetrating hole of the supporting sleeve and the attaching hole of the second fastener; wherein when the pivotable head is horizontally adjustable about the second fastener to a determined angle with respect to the supporting sleeve, the neck portion will be blocked by the third fastener.

In conclusion, the present invention provides a display supporting device, a pivotable head which is rotatably coupled to an end of a hollow supporting sleeve, is adapted to rotatably couple a display unit by coupling the display unit to a first fastener, this enables the display unit to be vertically adjustable with respect to the pivotable head. On the other hand, the pivotable head rotatably coupled to the supporting sleeve also enables the display unit to be horizontally adjustable with respect to the supporting sleeve, increasing the versatility of the display unit to provide the viewers with convenience.

In order to further the understanding regarding the present invention, the following embodiments are provided along with illustrations to facilitate the disclosure of the present invention.

### BRIEF DESCRIPTION OF THE DRAWINGS

FIG. 1 shows a perspective view of the display supporting device of the present invention;

FIG. 2 shows a perspective view of the display supporting device of the present invention from a different angle;

FIG. 3 shows a exploded view of the display supporting device of the present invention;

FIG. 4 shows a exploded view of the display supporting device of the present invention from a different angle;

FIG. 5 shows a side view of the display supporting device of the present invention under operation;

FIG. 6 shows a top view of the display supporting device of the present invention under another form of operation;

FIG. 7 shows a perspective view of the display supporting device of the present invention when the supporting device is assembled to the base plate;

### DETAILED DESCRIPTION OF THE PREFERRED EMBODIMENTS

The aforementioned illustrations and following detailed descriptions are exemplary for the purpose of further explaining the scope of the present invention. Other objectives and advantages related to the present invention will be illustrated in the subsequent descriptions and appended drawings.

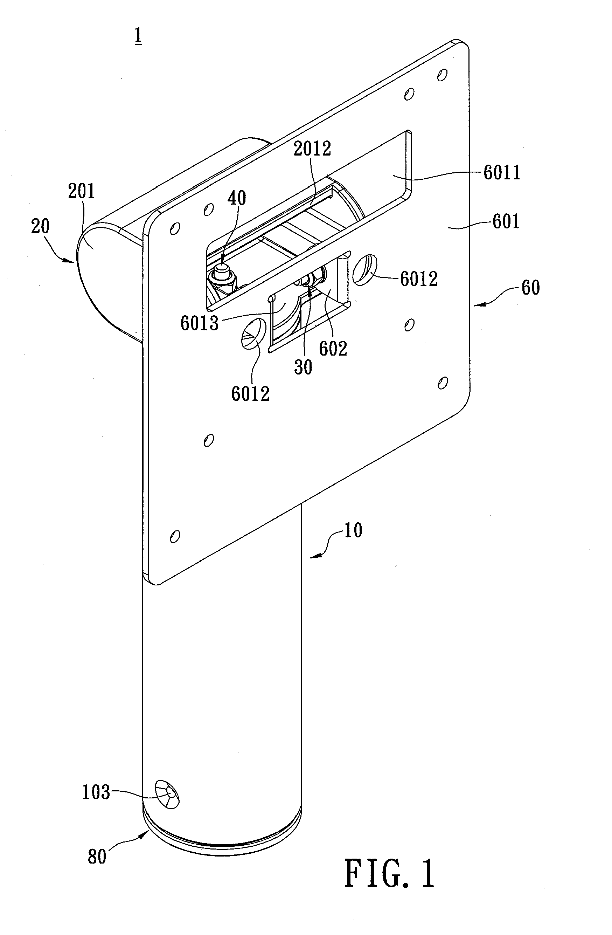

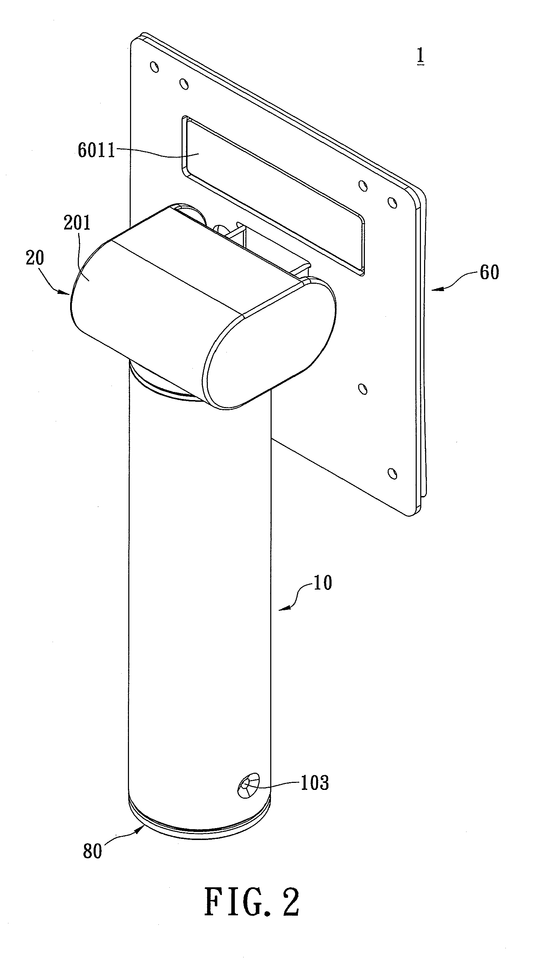

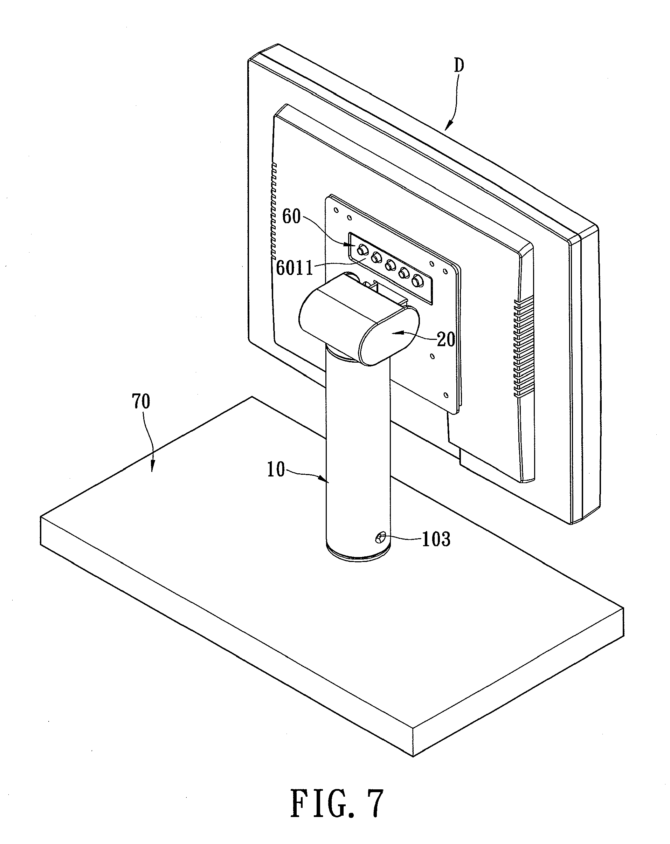

Referring now to FIGS. 1-4, the embodiment of the present invention provides a display supporting device to support the display unit D (shown in FIG. 7), the display unit D is connected to a plurality of exposed wires (not shown), the supporting device 1 comprises: a supporting sleeve 10, a pivotable head 20, two first fasteners 30, a second fastener 40 and a third fastener 50 wherein the display unit D is fastened adjacently to the first fastener 30.

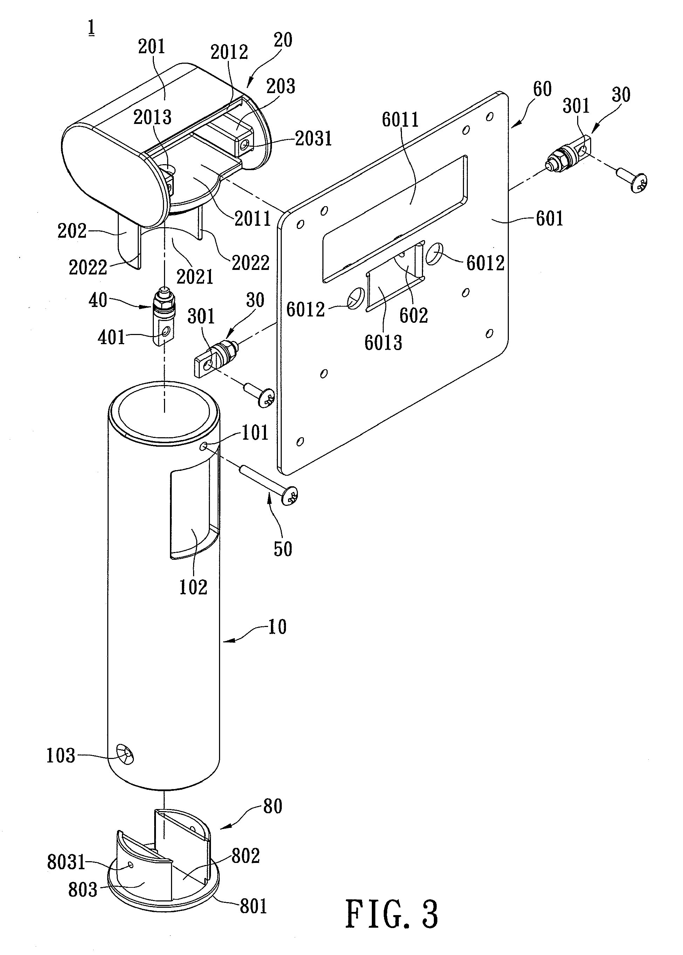

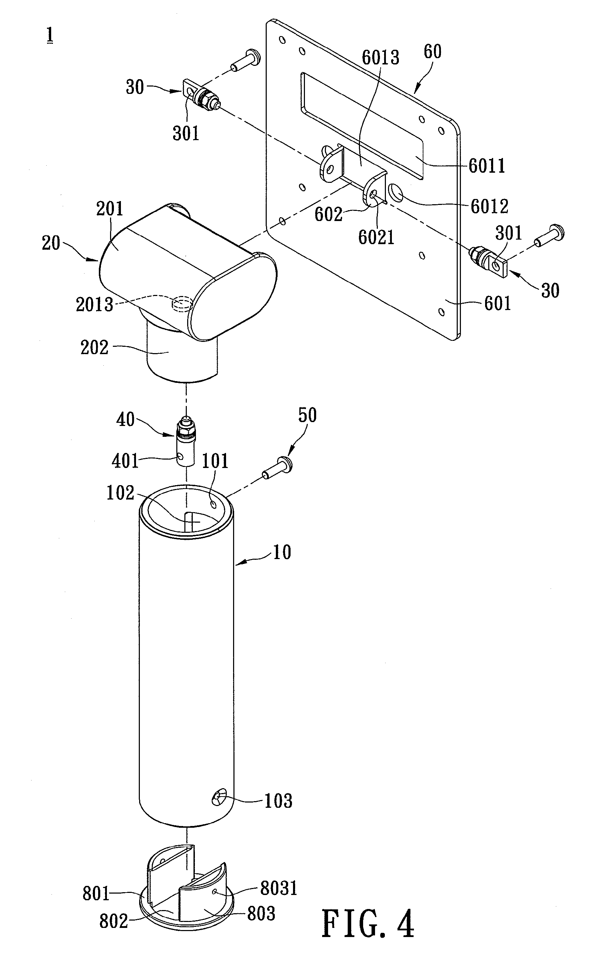

Referring now to FIG. 3 & FIG. 4, the supporting sleeve 10 has a circular hollow transverse cross-section, a penetrating hole 101 on the side wall thereof, and an opening 102, and the penetrating hole 101 is located between the pivotable head 20 and the opening 102. On the other hand, the exposed wires connected with the display unit D pass through the opening 102 and stretches into the supporting sleeve 10, enabling simplified management of the wires as they are neatly bundled.

The pivotable head 20 comprises a head portion 201 and a neck portion 202 connected thereto, the head portion 201 indent to form a concave channel 2011. Together, a channel opening 2012 of the channel 2011, the opening 102 of the supporting sleeve 10 and the penetrating hole 101 are formed on the same side of the supporting device 10. A through hole 2013 is arranged on one side of the head portion 201 adjacent to the supporting sleeve 10, the neck portion 202 stretches into one end of the supporting sleeve 10 and has a pair stopping sections 2022 defining a mouth 2021 that corresponds to the penetrating hole 101.

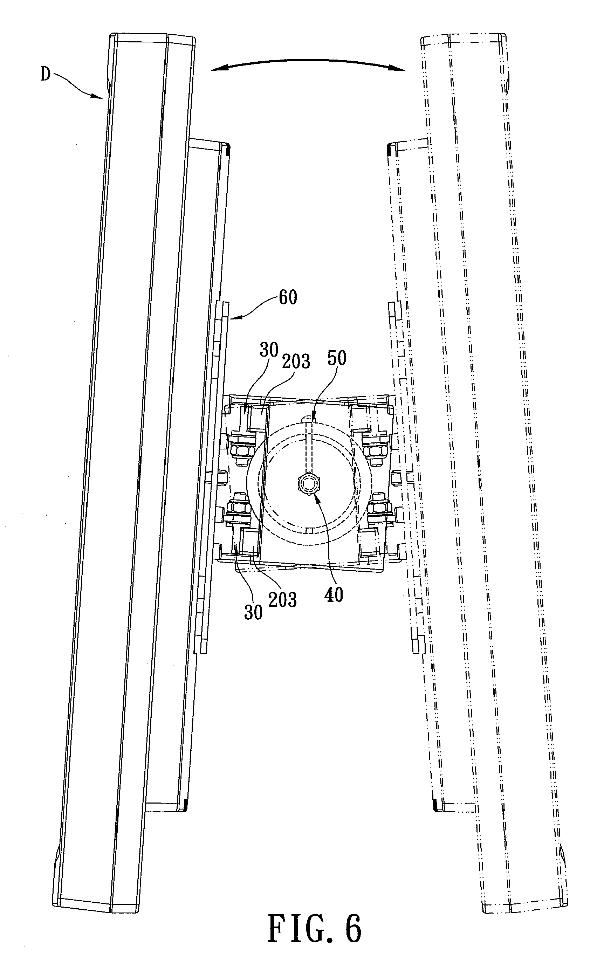

Referring now to FIG. 3 & FIG. 4, the transverse width of the mouth 2021 is generally larger than the transverse width of the opening 102, when the mouth 2021 of the neck portion 202 corresponds to the penetrating hole 101 and positions in the same side of the opening 102, this will be defined as the pivot-positive position (shown in FIG. 1), the figure depicts that the entire neck portion 202, in correspondence to the opening, is hidden within the supporting sleeve 10. When the pivotable head is horizontally adjustable with respect to the supporting sleeve 10 (shown in FIG. 6), the neck portion 202 will be exposed partially in the opening 102 of the supporting sleeve 10.

Preferably, the pivotable head 20 includes two fastening bolts 203, however it is not limited to by this due to practical reasons (for instance, a stronger supporting power is required by the display support).

Referring now to FIG. 3, the preferred positioning of the fastening bolts 203 is in the relative two sides of the inner walls of the concave channel 2011. However, the fastening bolts 203 can also be positioned in the inner walls of the concave channel 2011 away from the channel opening 2012, these are simple positioning differences of the fastening bolts 203, therefore, all simple changes of the positioning of the fastening bolts 203 should be included in the coverage of protection of the present invention.

The fastening bolts 203 extend and form in the direction of the channel opening 2012, a fastening hole 2031 is arranged on one side of the fastening bolts 203 abut the channel mouth 2012, the first fastener 30 is arranged in the pivotable head 20 for coupling the display unit D, a docking hole 301 corresponding to the fastening hole 2031 is arranged in one end of the first fastener 30 adjacent to the fastening bolts 203. A preferable fastening method of this embodiment uses a screw (not shown) to insert through the docking hole 301 and the fastening hole 2031 respectively, against the direction of the display unit D toward the pivotable head, to fasten the display unit D. Other fastening methods such as bolting may also be used in this embodiment. For those who are familiar to the arts of fastening may understand the related arts conventionally used hence shall hereby stop listing all in detail. However, the current fastening method used shall describe in detail in the following.

Referring now to FIG. 3 & FIG. 4, in this embodiment, the second fastener 40 has an attaching hole 401 corresponding to the penetrating hole 101 of the supporting sleeve 10, wherein the second fastener 40 passes through the through hole 2013 of the head portion 201 partially and protrudes toward the supporting sleeve 10 longitudinally, thereby enabling horizontal rotation of the pivotable head 20 about the second fastener 40 (shown in FIG. 6). In other words, the pivotable head 20 is in a manner pivotable by making use of the second fastener 40, which acts as the central axis; thus, the pivotable head 20 is horizontally adjustable about the second fastener 40 with respect to the supporting sleeve 10.

Additionally, the third fastener 50 aligningly passes through the penetrating hole 101 of the supporting sleeve 10 and the attaching hole 401 of the second fastener 40, towards the supporting sleeve 10. To further explain, the third fastener 50 is a screw structure which is inserted in the penetrating hole 101 to fasten the attaching hole 401 of the second fastener 40, when the pivotable head 20 is horizontally adjustable with respect to the supporting sleeve 10, the third fastener 50 will remain still due to its position locked and limited by the penetrating hole 101 and the attached hole 401.

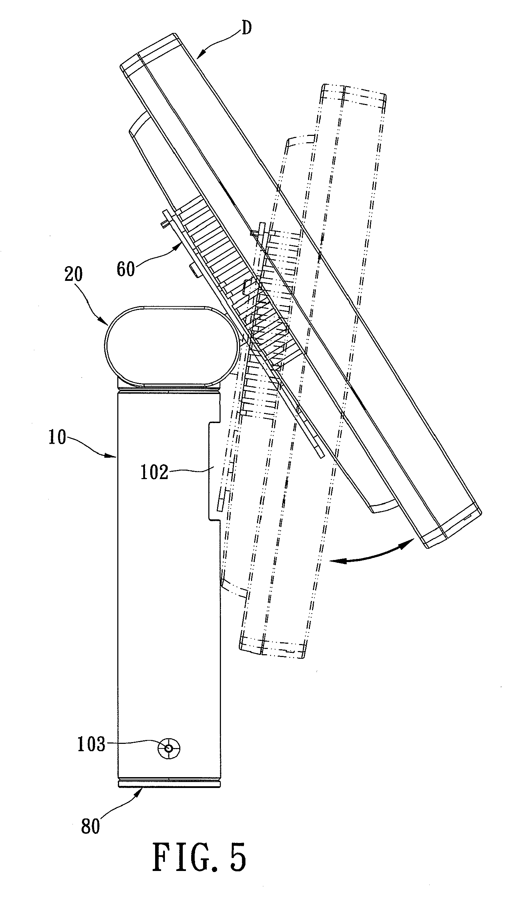

One advantage of the display supporting device of the present invention is that the display unit D supported by the pivotable head 20 has a certain standard of versatility, therefore the display unit D is vertically adjustable with respect to the pivotable head 20 (shown in FIG. 5). In addition, when the pivotable head 20 is horizontally adjustable about the second fastener 40, which acts as the central axis, to the determined angle with respect to the supporting sleeve 10 (shown in FIG. 6), the neck portion 202 will be blocked by the third fastener 50. In this embodiment, the preferred determined angle of the pivotable head 20 is 90° when the pivotable head 20 is horizontally adjustable about the second fastener 40 with respect to the supporting sleeve 10, in other words, the transverse width of the mouth 2021 of the neck portion 202 of the pivotable head 20 is 180°, therefore, when that pivotable head 20 is adjustable in the left/right direction to reach 90° with respect to the supporting sleeve 10, the pair of stopping sections 2022 of the neck portion 202 will be blocked by the third fastener 50, however, the aforementioned determined angle can be adjusted due to practical reasons and shall not be restricted to by this.

Referring now to FIG. 3 & FIG. 4, in this embodiment, the display supporting device 1 further comprises a supporting member 60 which includes a supporting plate 601 and two supporting arms 602, the supporting arms 602 are arranged on one side of the supporting plate 601 adjacent to the pivotable head 20 while the display unit D is assembled on the alternate side, the supporting arms 602 extend and form in the direction of the concave channel 2011 of the pivotable head 20 and the ends of the supporting arms 602, away from the supporting plate 601 are rotatably coupled to the first fasteners 30. Furthermore, the first fastener 30 comprises a screw body and a screw hat (not labeled), the screw hat assembly is arranged in one end of the first fastener 30 while the docking hole 301, with respect to the screw hat assembly, is arranged in the other end, the supporting arms 602 is substantially thin-tabular shaped, a supporting hole 6021 corresponding to the screw body of the first fastener 30 is arranged in one end of the supporting arm 602, adjoining the first fastener 30, the screw body of the first fastener 30 is inserted into the supporting hole 6021 to allow the ends of the supporting arms 602, away from the supporting plate 601, screwed and fastened between the screw hat and the fastening bolt 203.

An access channel 6011 is arranged in the supporting plate 601, the exposed wires of the display unit D pass through the access channel 6011 and the opening 102 sequentially, stretching into the inner section of the supporting sleeve 10, this enables most of the exposed wires of the display unit D to be hidden into the supporting sleeve 10, providing convenience for viewers to bind and keep the wires in order so as to enhance aesthetic.

Referring now to FIG.3 & FIG. 4, the supporting plate 601 in this embodiment further comprises two first mounted channel 6012 and a second mounted channel 6013, the first mounted channels 6012 correspond to the dockings hole 301 of the first fastener 30 while the second mounted channel 6013 corresponds to the screw hat assembly of the first fastener 30, the purpose of the first mounted channels 6012 and the second mounted channel 6013 of the supporting plate 601 is to allow viewers to fasten the first fastener 30 by using fastening apparatus (not shown) to pass through the first mounted channel 6012 and the second mounted channel 6013, toward the direction of the concave channel 2011 of the pivotable head 20. In this embodiment, it is preferred that the access channel 6011 of the supporting plate 601 be positioned above the second mounted channel 6013(as shown), however, by positioning the access channel 6011 under the second mounted channel 6013(not shown), it remains possible for the exposed wires of the display unit D to pass through the access channel 6011,positioned under the second mounted channel 6013, stretching into the supporting sleeve 10 through the opening 102 thereof and being kept orderly within.

Referring now to FIG. 3 and FIG. 7, in this embodiment, it comprises a base plate 70 and a connecting member 80, one end of the supporting sleeve 10 with respect to the pivotable head 20 is fastened to the base support 70. The connecting member 80 has a base region 801, an assembling channel 802 which penetrates through the base support 801 and two up-projecting sections 803, the base region 801 is screwed and fastened to the base plate 70, the up-projecting section 803 has an orifice hole 8031, one end of the supporting sleeve 10, away from the pivotable head 20, has two relative sleeve-fastening holes 103, the up-projecting sections 803 extends into the supporting sleeve 10 with respect to the pivotable head 20, the orifice hole 8031 of the up-projecting sections 803 corresponding to the sleeve-fastening hole 103 can be fastened to the supporting sleeve 10 by means of screwing or bolting, the exposed wires of the display unit D passes through the assembling channel 802 to connect electrically with the host machine (not shown).

Additionally, the border of the inner wall of the supporting sleeve 10 away from the pivotable head 20, can form at least a receiving portion (not shown), the receiving portion practices the same duty as the aforementioned base region 801 of the connect member 80, enables the supporting sleeve 10 to be screwed and fastened to the base plate 70, in other words, they can be integrally formed as a single unit so as to reduce cost due to producing new molds of the components.

According to the embodiment of the present invention, the display supporting device utilizes the pivotable head which is rotatably coupled to an end of a hollow supporting sleeve, is adapted to rotatably couple a display unit by coupling the display unit to a first fastener, enabling vertical rotation of the display unit with respect to the pivotable head. On the other hand, by utilizing the pivotable head which is rotatably coupled to the supporting sleeve, enables horizontal rotation of the display unit with respect to the supporting sleeve, thus increasing the versatility of the display unit so as to provide convenience for the viewers. Furthermore, the exposed wires of the display unit can pass through the opening of the supporting sleeve, stretching into the supporting sleeve to allow the exposed wires to be neatly bundled and properly managed so as to maintain a clean and orderly appearance.

The descriptions illustrated *supra* set forth simply the preferred embodiments of the present invention; however, the characteristics of the present invention are by no means restricted thereto. All changes, alternations, or modifications conveniently considered by those skilled in the art are deemed to be encompassed within the scope of the present invention delineated by the following claims.

## Claims

1. A display supporting device(1) for supporting a display unit having at least one exposed wire, the display supporting device(1) comprises:
a supporting sleeve(10) having a circular hollow transverse cross-section and at least one penetrating hole(101) on the side wall thereof;
a pivotable head(20) including a head portion(201) and an neck portion(202) connected thereto,
wherein the head portion(201) has a through hole(2013) arranged proximate the hollow section of the supporting sleeve(10),
wherein the neck portion(202) has a pair of stopping sections(2022) defining a mouth(2021) that corresponds to the penetrating hole(101) and is adapted to rotatably couple one end of the supporting sleeve(10) to enable lateral angle adjustment,
at least a first fastener(30) arranged in the pivotable head(20) for coupling the display;
a second fastener(40) having at least one attaching hole(401) corresponds to the penetrating hole(101), wherein the second fastener(40) passes through the through hole(2013) of the head portion(201) partially and protrudes toward the supporting sleeve (10)longitudinally, thereby enabling horizontal rotation of the pivotable head(20) about the second fastener(40);
a third fastener(50) aligningly passing through the penetrating hole(101) of the supporting sleeve(10) and the attaching hole(401) of the second fastener(40),
wherein the stopping section of the neck portion(202) will be blocked by the third fastener(50) when the pivotable head(20) rotates horizontally about the second fastener(40) to a predetermined angle with respect to the supporting sleeve(10).

2. The display supporting device(1) according to claim 1, wherein the supporting sleeve(10) includes an opening(102), the head portion(201) indent to form a concave channel(2011); together, a channel opening(2012) of the concave channel(2011), the opening(102) of the supporting sleeve(10) and the penetrating hole(101) are formed on the same side of the supporting device(1), and the penetrating hole(101) is positioned between the pivotable head(20) and the opening(102).

3. The display supporting device(1) according to claim 2, wherein the pivotable head(20) includes at least one fastening bolt(203), the fastening bolt(203) is arranged at least on one side of the inner wall of the concave channel(2011) and the fastening bolt(203) extends and forms in the direction of the channel opening(2012), a fastening hole(2031) is arranged on a side of the fastening bolt(203) abut the channel mouth(2021), a docking hole(301) corresponding to the fastening hole(2031) is arranged in one end of the first fastener(30) adjacent to the fastening bolt(203).

4. The display supporting device(1) according to claim 3, wherein the exposed wire of the display unit passes through the opening(102) partially and stretches into the supporting sleeve(10).

5. The display supporting device(1) according to claim 4, wherein the predetermined horizontal angle adjustment range of the pivotable head(20) is 90°.

6. The display supporting device(1) according to claim 4, further comprising a supporting member(60), wherein the supporting member(60) includes a supporting plate(601) and at least a supporting arm(602), the supporting arm(602) is arranged on one side of the supporting plate(601) adjacent to the pivotable head(20) while the display unit is assembled on the alternate side, the supporting arm(602) extends and forms in the direction of the concave channel(2011) of the pivotable head(20), the end of the supporting arm(602), away from the supporting plate(601), is rotatably coupled to the first fastener(30).

7. The display supporting device(1) according to claim 6, wherein an access channel(6011) is arranged in the supporting plate(601), the exposed wires of the display unit pass through the access channel(6011) and the opening(102) sequentially, stretching into the inner section of the supporting sleeve(10) to be orderly kept within.

8. The display supporting device(1) according to claim 6, wherein further including a base plate(70), wherein one end of the supporting sleeve(10) with respect to the pivotable head(20) is fastened to the base support.

9. The display supporting device(1) according to claim 8, wherein further comprising a connecting member(80), wherein the connecting member(80) includes a base region(801), an assembling channel(802) which penetrates through the base support and at least an up-projecting section(803), an orifice hole is arranged in the up-projecting section, at least one sleeve-fastening hole(103) is arranged in one end of the supporting sleeve(10) away from the pivotable head(20), the up-projecting sections(803) extends into the supporting sleeve(10) with respect to the pivotable head(20), the orifice hole of the up-projecting section(803) corresponding to the sleeve-fastening hole(103) is fastened to the supporting sleeve(10) and the exposed wires of the display unit passes through the assembling channel(802).

10. The display supporting device(1) according to claim 9, wherein the base region(801) of the connecting member(80) is connected to the base plate(70).
